# EUROPEAN PATENT APPLICATION

(11) **EP 4 773 161 A1**
(43) Date of publication of application: **08.07.2026**
(21) Application number: 24881961.7
(22) Date of filing: 24.06.2024
(51) Int. Cl.: H01F 27/245, H01F 1/147, H01F 27/25

(54) **WOUND CORE AND TRANSFORMER**

(30) Priority: 27.10.2023 JP 2023184929
(71) Applicant: JFE Steel Corporation, Tokyo 100-0011 (JP)
(72) Inventor: ICHIHARA, Yoshihisa, Tokyo 100-0011 (JP); OMURA, Takeshi, Tokyo 100-0011 (JP); NAKAMURA, Koji, Tokyo 100-0011 (JP)
(74) Representative: Haseltine Lake Kempner LLP
(86) International application number: PCT/JP2024/022908
(87) International publication number: WO 2025/088843

(57) **Abstract**

A wound iron core (10) is configured by winding a grain-oriented electrical steel sheet (11) in the rolling direction. In a cross-section parallel to the rolling direction at a bent portion of a corner (12) of the wound iron core (10), Kout is an average value of a KAM value in a region from a center of thickness of the grain-oriented electrical steel sheet (11) to an outer peripheral side of the wound iron core (10), Kin is an average value of the KAM value in a region from the center of thickness of the grain-oriented electrical steel sheet (11) to an inner peripheral side of the wound iron core (10), and KR defined as KR = Kin/Kout is 1.05 or more and 1.6 or less.

## Description

### TECHNICAL FIELD

The present disclosure relates to wound iron cores and transformers.

### BACKGROUND

Iron cores of transformers are broadly classified into wound iron cores and laminate iron cores. In both types of iron cores, grain-oriented electrical steel sheets are often used as the raw material.

There are two known types of wound iron cores. In the present specification, one is referred to as "Tranco-core" or "Tanco", and the other is referred to as "Unicore".

FIG. 1 schematically illustrates the two types. Tranco is described in Patent Literature (PTL) 1, for example. Tranco is a wound iron core made by winding a grain-oriented electrical steel sheet in the rolling direction to form a baumkuchen-like shape and then pressing from all sides to form a rectangular shape with arc-shaped corners.

Unicore is described in PTL 2, for example. Unicore is a wound iron core in which steel sheets, which have been bent in advance at the locations corresponding to the corners to form angled portions, are stacked in the thickness direction.

Compared to Tranco, Unicore does not require pressing, so the equipment required for production can be relatively small. Furthermore, since the strain introduced into the steel sheets during production of Unicore is concentrated only in the areas where bending is performed, annealing equipment for strain relief is not required. Unicore is being increasingly adopted because of these industrial advantages.

In recent years, from the viewpoint of energy conservation and environmental regulations, there has been a strong demand for reducing energy loss in transformers and reducing noise during operation of transformers. To improve the efficiency of transformers, efforts are being made to improve the properties of grain-oriented electrical steel sheets, which are used as iron core raw material.

It is known that when a transformer is produced using grain-oriented electrical steel sheets as the iron core raw material, the iron loss of the transformer increases more than the iron loss of the electrical steel sheets that are the raw material. This increase ratio is known as the building factor. The building factor is defined as the iron loss of the transformer divided by the iron loss of the raw material electrical steel sheet.

Therefore, to improve the efficiency of transformers, it is important during development to improve the building factor in addition to improving the properties of the electrical steel sheet used as the raw material.

Various methods are being explored to improve the building factor. For example, PTL 3 proposes subjecting a grain-oriented electrical steel sheet in the vicinity of the joint to a magnetic domain refining treatment using strain. The magnetic domain refining technique is a technique that forms magnetic discontinuities in the rolling direction by using thermally distorted portions. By forming such magnetic discontinuities, the magnetic domain refining technique can refine the magnetic domain of the grain-oriented electrical steel sheet and improve iron loss.

PTL 4, for example, proposes tilting the joint with respect to the winding direction to improve iron loss due to magnetic flux transfer.

In the case of Unicore, large distortion is imparted to the corners by the bending process, and this distortion increases the building factor. PTL 5, for example, proposes a method of improving the deterioration of magnetism due to distortion at the corners by performing a magnetic domain refining treatment via the addition of grooves to the bent portion of the corners.

### CITATION LIST

### Patent Literature

PTL 1: JP 2016-146441 A
PTL 2: JP 2005-286169 A
PTL 3: JP 2020-96100 A
PTL 4: JP 2005-150507 A
PTL 5: JP 2021-163942 A

### SUMMARY

### (Technical Problem)

As methods of improving the building factor, the methods disclosed in PTL 3 to 5 are all effective. However, the matter disclosed in each of PTL 3 to 5 is a proposal that assumes the performance of additional treatment when designing the iron core. This has led to problems such as an increase in production costs due to the need to change the shear direction during production and an increase in the number of production steps.

It is an aim of the present disclosure to provide a wound iron core and a transformer that can improve the building factor by suppressing an increase in the number of production steps and the production costs.

### (Solution to Problem)

[1] A wound iron core configured by winding a grain-oriented electrical steel sheet in a rolling direction, wherein
   in a cross-section parallel to the rolling direction at a bent portion of a corner of the wound iron core,
   Kout is an average value of KAM values in a region from a center of thickness of the grain-oriented electrical steel sheet to an outer peripheral side of the wound iron core,
   Kin is an average value of KAM values in a region from the center of thickness of the grain-oriented electrical steel sheet to an inner peripheral side of the wound iron core, and
   KR defined as KR = Kin/Kout is 1.05 or more and 1.6 or less.
[2] The wound iron core according to [1], wherein the KR is 1.1 or more and 1.5 or less.
[3] The wound iron core according to [1] or [2], wherein the corner includes an angled portion.
[4] The wound iron core according to any one of [1] to [3], comprising at least one discontinuous portion of the grain-oriented electrical steel sheet in a magnetic path direction.
[5] A transformer comprising the wound iron core according to any one of [1] to [4] and a coil.
[6] The wound iron core according to any one of [1] to [4], wherein
   the wound iron core is a single-phase wound iron core or a three-phase five-leg wound iron core in which a plurality of single-phase wound iron cores is arranged,
   a gap length in the rolling direction of each layer of the discontinuous portion is defined as w, a maximum value of the gap length is defined as wₘₐₓ, and a minimum value of the gap length is defined as wₘᵢₙ, the gap length being obtainable by observing the discontinuous portion of the grain-oriented electrical steel sheet from a side surface in a stacking direction of the grain-oriented electrical steel sheet and the rolling direction of the grain-oriented electrical steel sheet,
   a ratio wr between the maximum value and the minimum value defined as wr = wₘₐₓ/wₘᵢₙ is 100 or less, and
   the gap length is a length of the discontinuous portion, the discontinuous portion being 0.1 mm or more.
[7] The wound iron core according to any one of [1] to [4], wherein
   the wound iron core is a three-phase three-leg wound iron core formed by a combination of an inner wound iron core and an outer wound iron core,
   a gap length in the rolling direction of each layer of the discontinuous portion is defined as w, a maximum value of the gap length is defined as wₘₐₓ, and a minimum value of the gap length is defined as wₘᵢₙ, the gap length being obtainable by observing the discontinuous portion of the grain-oriented electrical steel sheet from a side surface in a stacking direction of the grain-oriented electrical steel sheet and the rolling direction of the grain-oriented electrical steel sheet, and
   a ratio wr between the maximum value and the minimum value defined as wr = wₘₐₓ/wₘᵢₙ is 500 or less.

### (Advantageous Effect)

The wound iron core and transformer according to the present disclosure can improve the building factor by suppressing an increase in the number of production steps and the production costs.

### BRIEF DESCRIPTION OF THE DRAWINGS

In the accompanying drawings:
FIG. 1 is a diagram illustrating two types of wound iron cores;
FIG. 2 is a diagram illustrating the chemical composition of a steel slab when an experiment was conducted;
FIG. 3 is a diagram illustrating the results of measurements of the relationship between the building factor and KR;
FIG. 4 is a diagram illustrating the results of measurements of the relationship between noise and KR;
FIG. 5 is a diagram illustrating a schematic configuration of a wound iron core according to an embodiment of the present disclosure;
FIG. 6 is a diagram illustrating a schematic configuration of a transformer according to an embodiment of the present disclosure;
FIG. 7 is a diagram illustrating an example of the configuration of a bent portion;
FIG. 8 is a diagram illustrating the chemical composition of a steel slab in an Example;
FIG. 9 is a diagram illustrating a three-phase three-leg wound iron core; and
FIG. 10 is a diagram schematically illustrating a gap length w.

### DETAILED DESCRIPTION

### (Experiment results)

First, experiment results that led to the conception of an embodiment of the present disclosure will be described.

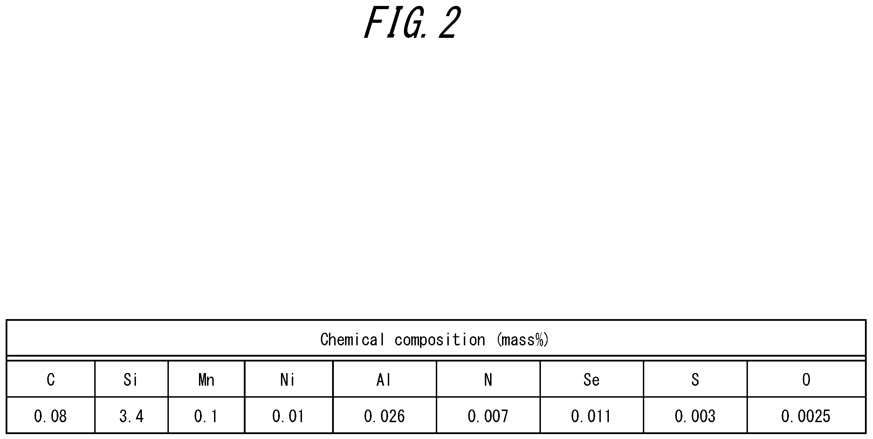

FIG. 2 illustrates the chemical composition of the steel slab when the experiment was conducted. In the experiment, a steel strip of a grain-oriented electrical steel sheet produced by a general production process using a steel slab having the chemical composition illustrated in FIG. 2 was used as a test material.

The steel strip of the grain-oriented electrical steel sheet was slit to a sheet width of 100 mm and wound into a shape with a lamination thickness of 30 mm, long sides of 300 mm, and short sides of 150 mm. In this way, a single-phase Unicore was produced. At this time, the portion corresponding to the short side was sheared off to form a shape called a cut core. In this case, three types of cores were produced with respect to the bent portion: one 90° bend, two 45° bends, and three 30° bends. In this case, each bending angle θ was set to θ ± 1°. Furthermore, when producing each core, the thickness of the tension coating was varied between the outer periphery and the inner periphery of the steel sheet. When the cores were produced, none of the cores was subjected to stress relief annealing (SRA).

Using a single sheet sample cut out from the test steel strip, iron loss was measured by the single sheet magnetic property measurement method specified in JIS C2556. In addition to this measurement, the iron loss characteristics (transformer core loss) of each produced wound iron core transformer were measured when the magnetic flux density in the iron core legs was 1.7 T at a frequency of 50 Hz.

The iron loss characteristics at a magnetic flux density of 1.7 T in the iron core legs and a frequency of 50 Hz as described above were measured by measuring no-load loss using a wattmeter.

The building factor (BF) of each transformer was calculated from the ratio of the transformer core loss measured in this way to the single sheet iron loss.

Furthermore, each model transformer was excited in a soundproof room under the conditions of a maximum magnetic flux density Bm = 1.7 T and a frequency of 50 Hz, and the noise level dBA (transformer noise) was measured using a noise level meter.

After the various measurements were completed, a sample was cut out from a corner of the iron core and embedded in a carbon mold. Thereafter, a cross-section parallel to the rolling direction was polished and subjected to electron backscatter diffraction (EBSD) measurement.

From the results thus obtained, a kernel average misorientation (KAM) map was calculated. Furthermore, taking the average value of the KAM values in the region from the center of thickness of the steel sheet to the outer peripheral side of the wound iron core as Kout, and the average value of the KAM values in the region from the center of thickness of the steel sheet to the inner periphery of the wound iron core as Kin, the ratio of Kin to Kout, i.e., KR = Kin/Kout, was calculated.

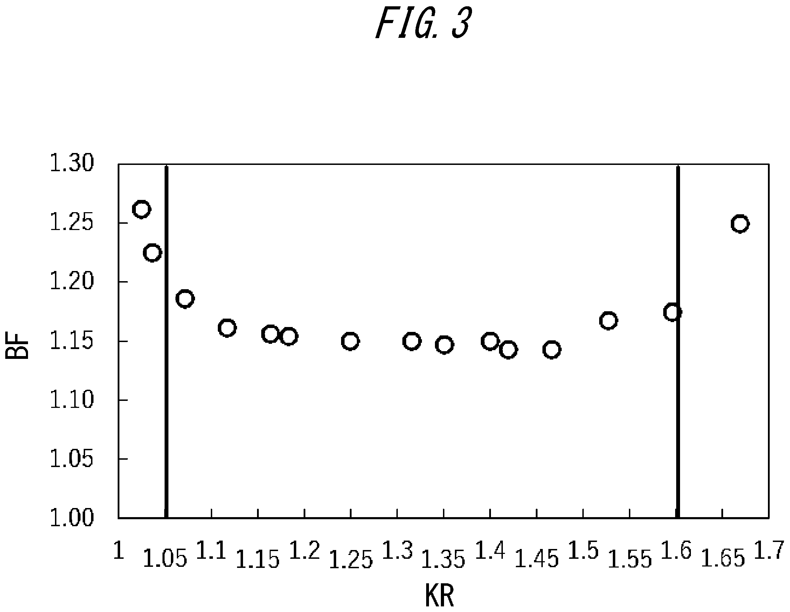

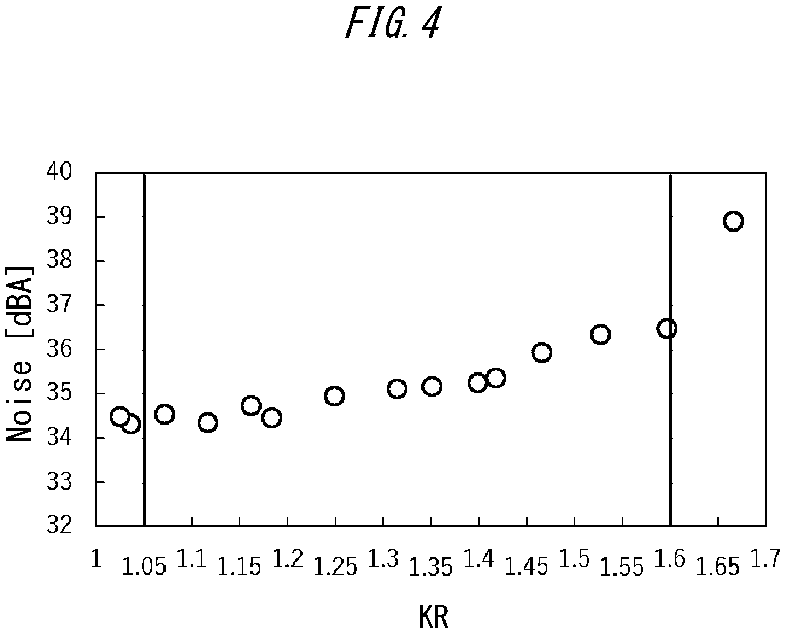

FIG. 3 illustrates the results of measurements of the relationship between the building factor and KR. FIG. 4 illustrates the results of measurements of the relationship between noise and KR.

Referring to FIG. 3, a significant improvement in the building factor (BF) can be seen in the region in which KR is 1.05 or more and 1.6 or less. This is thought to be because the higher the KR, i.e., the higher the residual compressive stress acting on the inner periphery of the steel sheet, the more the springback of the steel sheet is suppressed, and the closer it becomes to a rectangular shape, thereby reducing the effect of external stress at the time of formation into a wound iron core.

It can be seen from FIGS. 3 and 4 that when KR exceeds 1.6, the building factor (BF) and noise tend to deteriorate. This is thought to be because excessive residual stress in the steel sheet caused excessive strain to remain in the steel sheet, resulting in deterioration of iron loss and magnetostriction.

It is clear from these results that a wound iron core with good characteristics can be obtained by setting KR to 1.05 or more and 1.6 or less. KR is more preferably 1.1 or more. KR is more preferably 1.5 or less. It is also clear that by setting KR to this more preferable range, a wound iron core with even better characteristics can be obtained.

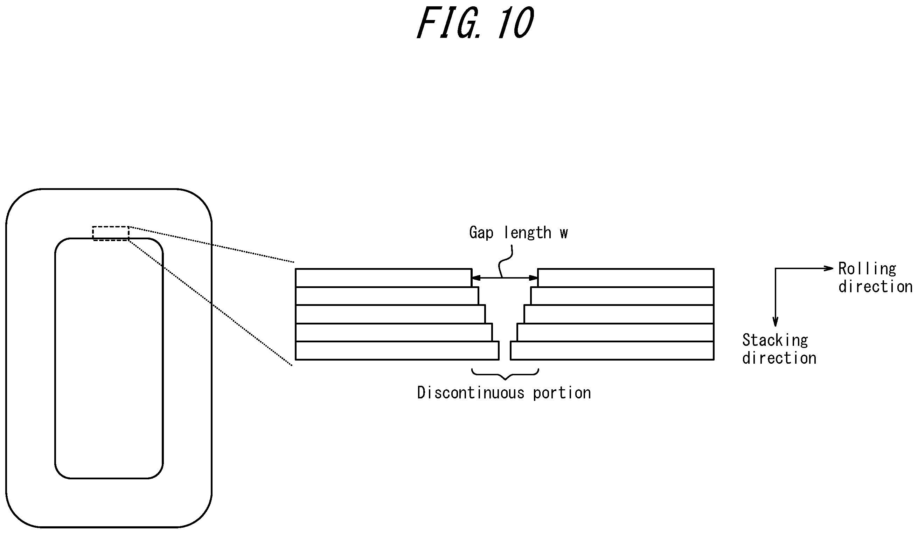

Furthermore, in a wound iron core having a discontinuous portion of the electrical steel sheet, stress acts on the discontinuous portion of the electrical steel sheet of a certain layer due to springback in such a way that the discontinuous portion is pushed apart from the steel sheet located farther inward in a wound iron core in which the above-mentioned KR is not taken into consideration. Therefore, we discovered that the gap length w of this discontinuous portion in the rolling direction increases with an increase in the number of stacked steel sheets, and the characteristics of the transformer deteriorate. We discovered that, in addition to adjusting the KR, by adjusting the shear length of the electrical steel sheets in the circumferential direction to be longer than the geometrically theoretical value, it is possible to keep the expansion of the gap length within a certain range and obtain a wound iron core with even better characteristics. FIG. 10 schematically illustrates the gap length w.

Here, the gap length of the joint can be measured by the following method. The side of the wound iron core, i.e., the surface defined by the steel sheet stacking direction and the rolling direction of the steel sheet, is photographed with a digital camera together with a scale such as an iron ruler, and its length is measured. Due to measurement considerations, a length of less than 0.1 mm results in a large error, so a value of 0.1 mm or more is adopted as the gap length. Furthermore, if the discontinuous portion is less than 0.1 mm, it is determined that no gap exists.

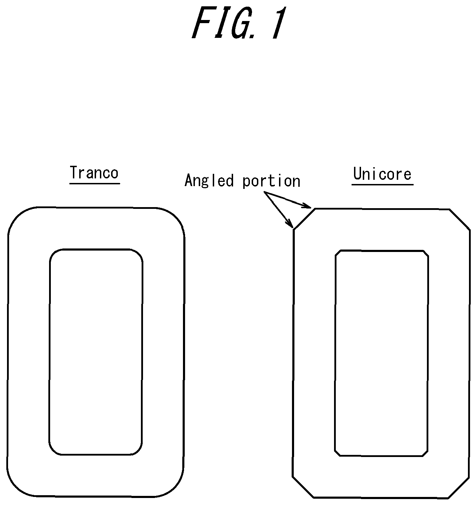

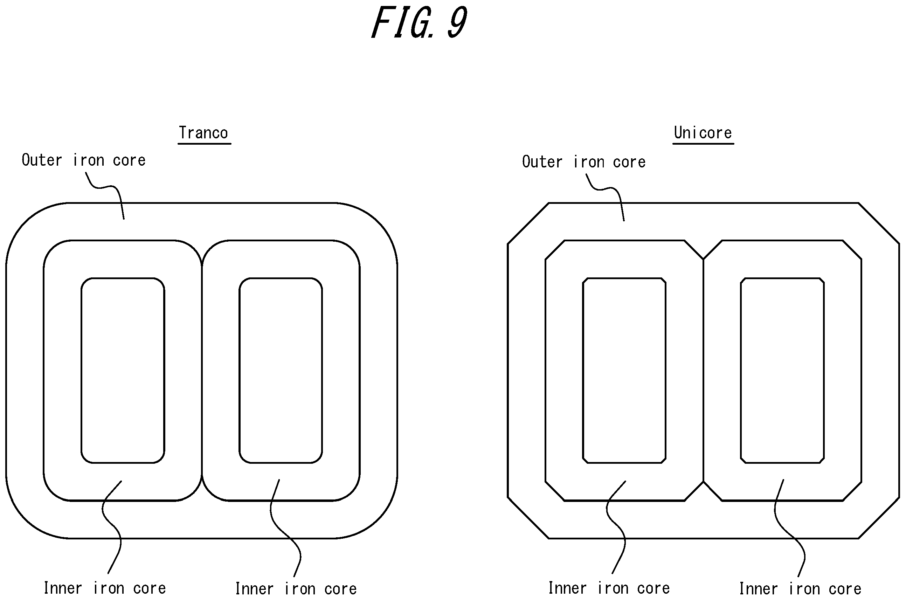

With respect to the gap length w of each layer obtained in this manner, the maximum value of the gap length is wₘₐₓ, the minimum value of the gap length is wₘᵢₙ, and the ratio wr of the maximum value to the minimum value, defined as wr = wₘₐₓ/wₘᵢₙ, needs to be 100 or less for a single-phase wound iron core or a three-phase five-leg wound iron core and needs to be 500 or less for a three-phase three-leg wound iron core. In the case of a single-phase or three-phase five-leg wound iron core, wr is more preferably 60 or less. In the case of a three-phase three-leg wound iron core, wr is more preferably 300 or less. The "single-phase wound iron core" is a wound iron core having the configuration illustrated in FIG. 1. Furthermore, the "three-phase five-leg wound iron core" is a wound iron core configured by arranging a plurality of single-phase wound iron cores. The "three-phase three-leg wound iron core" is a wound iron core formed by a combination of inner iron cores and an outer iron core as illustrated schematically in FIG. 9.

### (Present embodiment)

Next, a wound iron core according to an embodiment of the present disclosure will be described with reference to the drawings.

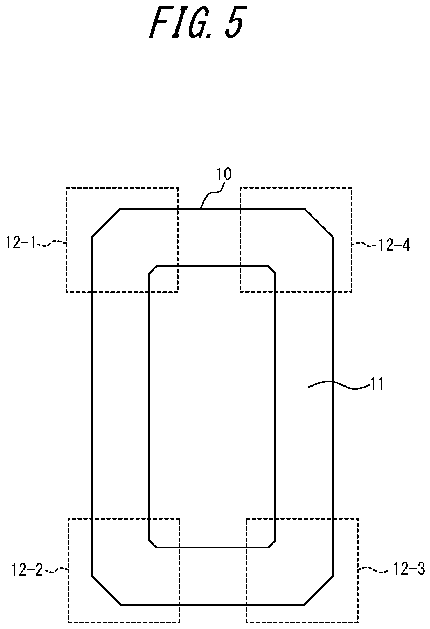

FIG. 5 is a diagram illustrating a schematic configuration of a wound iron core 10 according to an embodiment of the present disclosure.

The wound iron core 10 is configured by winding a grain-oriented electrical steel sheet 11 in the rolling direction. The wound iron core 10 has corners 12-1 to 12-4. Hereinafter, when there is no need to particularly distinguish between the corners 12-1 to 12-4, they may be simply referred to as the "corner 12." FIG. 5 illustrates a case in which the wound iron core 10 is of Unicore type. When the wound iron core 10 is Unicore type, the corner 12 includes angled portions as illustrated in FIG. 1.

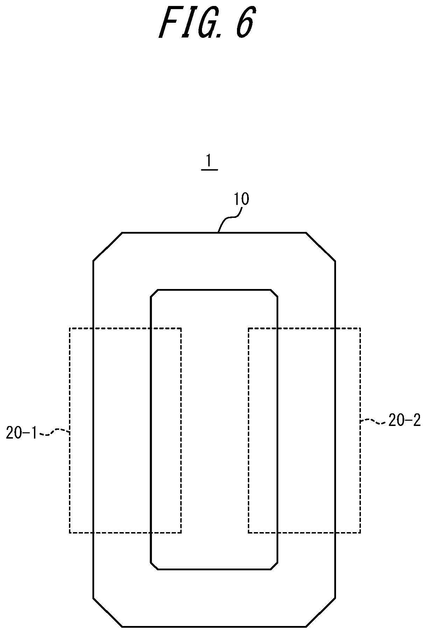

The wound iron core 10 can be used as a component of a transformer. FIG. 6 schematically illustrates the configuration of a transformer 1 according to an embodiment of the present disclosure. The transformer 1 includes the wound iron core 10, a coil 20-1, and a coil 20-2. The coils 20-1 and 20-2 are wound around the wound iron core 10 as illustrated in FIG. 2.

The grain-oriented electrical steel sheet 11 illustrated in FIG. 5 may be produced from a slab of steel material. The chemical composition of the slab for the grain-oriented electrical steel sheet 11 is a chemical composition capable of secondary recrystallization.

When an inhibitor is used in the grain-oriented electrical steel sheet 11, for example, when an AlN-based inhibitor is used, it suffices to add an appropriate amount of Al and N. When, for example, an MnS/MnSe-based inhibitor is used, it suffices to add an appropriate amount of Mn and of Se and/or S. It is also possible to use both inhibitors in combination.

When both inhibitors are used in combination, the preferred contents of Al, N, S and Se are as follows.
Al: 0.010 mass% to 0.065 mass%
N: 0.0050 mass% to 0.0120 mass%
S: 0.005 mass% to 0.030 mass%
Se: 0.005 mass% to 0.030 mass%

The grain-oriented electrical steel sheet 11 may be a steel sheet in which the contents of Al, N, S, and Se are limited and no inhibitor is used. In this case, the contents of Al, N, S and Se are preferably suppressed as follows.
Al: less than 0.010 mass%
N: less than 0.0050 mass%
S: less than 0.0050 mass%
Se: less than 0.0050 mass%

Representative basic components and optionally added components applied to the steel material (slab) for the grain-oriented electrical steel sheet 11 will be specifically described below.

### C: 0.08 mass% or less

C is added to improve the microstructure of the hot-rolled sheet. If the C content exceeds 0.08 mass%, it becomes difficult to decarburize the steel to 50 mass ppm or less, at which point magnetic aging does not occur, during the production process. Therefore, the C content is preferably 0.08 mass% or less. Furthermore, since secondary recrystallization occurs even in steel materials that do not contain C, no particular lower limit is set for the C content.

### Si: 2.0 mass% to 8.0 mass%

Si is an element that is effective in increasing the electrical resistance of steel and improving iron loss. If the Si content is less than 2.0 mass%, the above-described improvement effects are not sufficiently exhibited. On the other hand, if the Si content exceeds 8.0 mass%, the formability and sheet passing property are significantly deteriorated, and the magnetic flux density is also reduced. Therefore, the Si content is preferably 2.0 mass% or more. The Si content is preferably 8.0 mass% or less.

### Mn: 0.005 mass% to 1.0 mass%

Mn is an element necessary for improving hot workability. If the Mn content is less than 0.005 mass%, it is difficult to obtain a sufficient effect of improving the hot workability. On the other hand, if the Mn content exceeds 1.0 mass%, the magnetic flux density deteriorates. Therefore, the Mn content is preferably 0.005 mass% or more. The Mn content is preferably 1.0 mass% or less.

In addition to the above basic components, the slab for the grain-oriented electrical steel sheet 11 may contain one or more of the following optionally added components selected and added as appropriate. The following optionally added components are known to be effective in improving magnetic properties.
Ni: 0.03 mass% to 1.50 mass%
Sn: 0.01 mass% to 1.50 mass%
Sb: 0.005 mass% to 1.50 mass%
Cu: 0.03 mass% to 3.0 mass%
P: 0.03 mass% to 0.50 mass%
Mo: 0.005 mass% to 0.10 mass%
Cr: 0.03 mass% to 1.50 mass%

Ni is effective for improving the hot-rolled sheet microstructure and improving the magnetic properties. If the Ni content is less than 0.03 mass%, the contribution to improving the magnetic properties is small. On the other hand, if the Ni content exceeds 1.50 mass%, secondary recrystallization becomes unstable and the magnetic properties deteriorate. Therefore, the Ni content is preferably 0.03 mass% or more. The Ni content is preferably 1.50 mass% or less.

Sn, Sb, Cu, P, Mo, and Cr are also elements that improve magnetic properties. If the content of any of the elements is less than the lower limit, the effect of improving the magnetic properties is insufficient. Furthermore, if the content of any of the elements exceeds the upper limit, the growth of secondary recrystallized grains is suppressed, resulting in deterioration of magnetic properties. Therefore, the contents of Sn, Sb, Cu, P, Mo, and Cr are preferably each within the aforementioned content ranges.

The slab for the grain-oriented electrical steel sheet 11 contains Fe and inevitable impurities as components other than those mentioned above.

The steel material (slab) of the grain-oriented electrical steel sheet 11 having the aforementioned chemical composition is subjected to hot rolling and then to hot-rolled sheet annealing. The slab is then subjected to one or two passes of cold rolling. This finishes the steel strip having the final sheet thickness.

The steel strip of final sheet thickness is subsequently subjected to decarburization annealing and coated with an annealing separator. The steel strip having the final sheet thickness is then wound into a coil. The steel strip having the final sheet thickness is then subjected to final annealing for the purpose of secondary recrystallization. Subsequently, the steel strip after the final annealing is subjected to flattening annealing and a tension coating is formed, yielding a steel strip as a product sheet.

Next, a method of calculating the KAM value and the KR value in the present embodiment will be described.

The corners 12 of the wound iron core 10 have bent portions. By being deformed and bent at the bent portion, the wound iron core 10 is bent at a 90° angle at the corner 12. Each corner 12 has at least one bent portion. For example, if the corner 12 has one bent portion, the corner 12 is bent at a 90° angle at the bent portion. If the corner 12 has two bent portions, for example, the corner 12 is bent at a 45° angle at each bent portion. Furthermore, if the corner 12 has three bent portions, for example, the corner 12 is bent at a 30° angle at each bent portion.

A restoring force called springback acts on the bent portion of the corner 12. Therefore, residual stress occurs in the grain-oriented electrical steel sheets 11 that make up the wound iron core 10, causing the wound iron core 10 to warp toward the outer peripheral side. However, since the entire wound iron core 10 is produced to maintain a rectangular shape, the grain-oriented electrical steel sheets 11 are in a state such that stress is applied so as to press the grain-oriented electrical steel sheets 11 toward the inner periphery of the wound iron core 10. Such stress contributes to iron loss and noise in the wound iron core 10, but the characteristics of the wound iron core 10 can be improved by optimizing the KAM value of the cross-section parallel to the rolling direction at the bent portion of the corner 12.

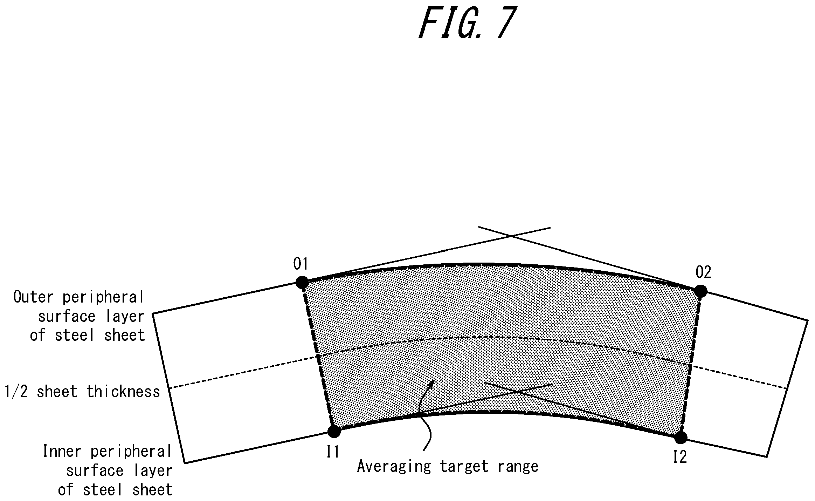

The bent portion will be described with reference to FIG. 7. Tangent lines are drawn as half lines from the flat surfaces (the outer peripheral surface layer of the steel sheet and the inner peripheral surface layer of the steel sheet) of the regions (flat portions) that do not have a curvature radius and are present on both sides in the rolling direction, toward the region that has a radius of curvature in the grain-oriented electrical steel sheet 11.

As illustrated in FIG. 7, the contact points between the tangent lines and the outer peripheral surface layer of the steel sheet are designated as contact points O1 and O2. The contact points between the tangent lines and the inner peripheral surface layer of the steel sheet are designated as contact points I1 and 12. At this time, the area enclosed by the four contact points O1, O2, I1, and I2 is the bent portion.

When calculating the KAM value and the KR value, a portion of the grain-oriented electrical steel sheet 11 is taken from the bent portion of the corner 12 of the wound iron core 10 so that a cross-section parallel to the rolling direction of the grain-oriented electrical steel sheet 11 becomes the cut surface. Next, the cut surface is subjected to distortion-free polishing.

Next, the crystal orientation difference of the polished surface that has been subjected to distortion-free polishing is analyzed by electron backscatter diffraction (EBSD), and the kernel average misorientation (KAM) value is calculated. In this case, the orientation difference is the orientation difference between a certain measurement point and a third adjacent point.

After calculating the KAM value from each measurement point in this way, the region is divided into an inner peripheral side and an outer peripheral side with half the thickness of the grain-oriented electrical steel sheet 11 as a boundary. Subsequently, the average value of KAM values in the region from the center of thickness of the grain-oriented electrical steel sheet 11 to the outer peripheral side of the wound iron core 10 is calculated as Kout. Furthermore, the average value of KAM values in the region from the center of thickness of the grain-oriented electrical steel sheet 11 to the inner peripheral side of the wound iron core 10 is calculated as Kin. Then, KR defined as KR = Kin/Kout is calculated.

In this case, the bent portion for which the average value of the KAM values is calculated is the area surrounded by the four tangent points O1, O2, I1, and I2 illustrated in FIG. 7, and is illustrated in FIG. 7 as the "averaging target range".

There are no particular limitations on the method for controlling the KR value, but for example, when producing the wound iron core 10, the film thickness or composition of the tension coating may be made to differ between the inner and outer peripheral surfaces of the corners 12 of the grain-oriented electrical steel sheets 11 used as the pieces of the wound iron core 10, so that the tension on the outer peripheral side is higher than that on the inner peripheral side, thereby enabling effective control.

It is thought that in the bent portions of the corners 12 of the wound iron core 10 having such a configuration, stronger compressive stress occurs at the inner periphery, causing an increase in Kin. However, the present disclosure is not limited to such a production method, and as long as the KR of the bent portion is within the range of the present embodiment, it is possible to obtain an improvement in the building factor due to the magnetic domain refining effect.

In addition, for the steps and production conditions other than those described above, a known production method for the grain-oriented electrical steel sheet 11 can be used as appropriate in the present embodiment.

As explained in the above experimental results with reference to FIGS. 3 and 4, the value of KR is preferably set to 1.05 or more. The value of KR is preferably set to 1.6 or less. A wound iron core 10 with good characteristics can thereby be obtained. The value of KR is more preferably 1.1 or more. The value of KR is more preferably 1.5 or less. This makes it possible to obtain a wound iron core 10 with even better characteristics.

In addition to adjusting the KR, it is preferable to adjust the shear length of the electrical steel sheets in the circumferential direction to be longer than the geometrically theoretical value, thereby keeping the expansion of the gap length of the discontinuous portion of the electrical steel sheets in the wound iron core within a certain range. The amount of adjustment for the shear length of the steel sheet cannot be generally defined, because it depends largely on the magnitude of the residual stress caused by springback of the iron core. However, the following adjustment methods, for example, are effective.

When producing Unicore, the electrical steel sheets are fed out one layer at a time from the bending machine, and workers stack the sheets as needed. At this time, the discontinuous portion of the electrical steel sheet of the iron core is photographed from the side of the iron core with a camera, and the gap length is measured. Next, if the gap length exceeds 50 times the minimum value up to that layer, this information is fed back to the feed amount of the next steel sheet, and the gap length is extended by only 50 times the minimum value. In this way, the gap length can be adjusted. Other methods that can be used include a method of stretching each layer at a constant rate (constant stretching) and a method of increasing the amount of stretching for each certain number of layers (stepwise stretching).

In this way, the wound iron core 10 according to the present embodiment is configured by winding a grain-oriented electrical steel sheet 11 in the rolling direction, and in a cross-section parallel to the rolling direction at a bent portion of a corner 12 of the wound iron core 10, Kout is an average value of KAM values in a region from a center of thickness of the grain-oriented electrical steel sheet 11 to an outer peripheral side of the wound iron core 10, Kin is an average value of the KAM values in a region from the center of thickness of the grain-oriented electrical steel sheet 11 to an inner peripheral side of the wound iron core 10, and KR defined as KR = Kin/Kout is 1.05 or more and 1.6 or less. In the wound iron core 10 according to the present embodiment, by setting the KR value at the bent portion of the corner 12 within such an appropriate range, it is possible to reduce the building factor due to magnetic flux transfer in the stacking direction and to reduce noise. Furthermore, by keeping the expansion of discontinuous portions in the electrical steel sheets due to springback within a certain range, it is possible to obtain even better transformer characteristics. In this case, the wound iron core 10 according to the present embodiment can be produced with a small number of production steps. Therefore, the wound iron core 10 according to the present embodiment can improve the building factor by suppressing an increase in the number of production steps and production costs.

### EXAMPLES

Next, the content of the present disclosure will be specifically described based on Examples. The following Examples are provided to illustrate preferred examples of the present disclosure, and the present disclosure is not limited to these Examples. It is also possible to implement the present disclosure by making modifications without departing from the scope and spirit of the disclosure, and such modes are also encompassed by the technical scope of the disclosure.

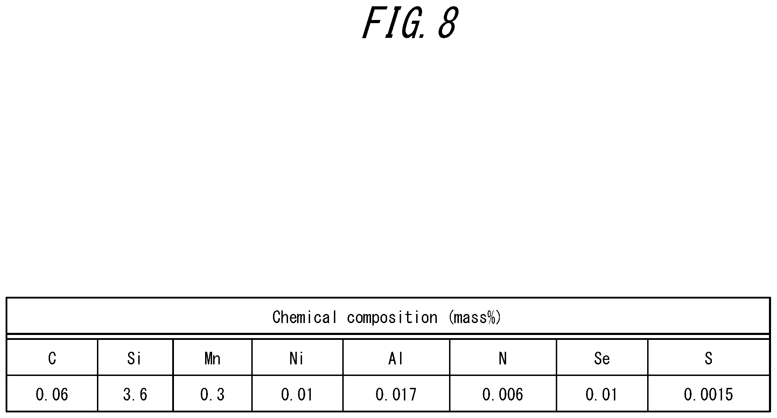

FIG. 8 is a diagram illustrating the chemical composition of the steel slab in the Examples. Using such a steel slab, steel strips A, B, C and D were produced.

Steel strip A is a grain-oriented electrical steel sheet produced by a general production process. Steel strip B is a grain-oriented electrical steel sheet that has been subjected to electrolytic etching on the surface of the steel strip after the cold rolling process to form linear grooves 15 µm deep and 40 µm wide periodically at 5 mm intervals in a direction perpendicular to the rolling direction and has then been subjected to a final annealing process. Steel strip C is a grain-oriented electrical steel sheet obtained by irradiating a portion of steel strip A with a laser. Steel strip D is a grain-oriented electrical steel sheet obtained by irradiating a portion of steel strip A with an electron beam.

These steel strips A, B, C and D were used as test materials. In this case, the type of tension coating was the same, and the coating thickness was varied within the range of 1 µm to 5 µm on the outer and inner periphery of the wound iron core to produce steel strips of grain-oriented electrical steel sheets.

Test pieces (samples) measuring 100 mm wide × 280 mm long were cut out from the steel strips of test material produced as described above, and the iron loss of each test piece was measured by the single sheet magnetic property measurement method described in JIS C2556.

Subsequently, each steel strip was wound in the rolling direction to produce a single-phase wound iron core model transformer (iron core weight 25 kg) and a three-phase wound iron core model transformer (iron core weight 50 kg). For steel strips A and B, both Tranco and Unicore types were produced. For Unicore, cores that had been annealed to relieve strain were also created. For steel strips C and D, only Unicore was produced because the magnetic domain refining effect of the laser and electron beam was lost by stress relief annealing.

These iron cores were produced in two shapes: a non-cut type that does not have a discontinuous portion, called an air gap, in the grain-oriented electrical steel sheet in the magnetic path direction, and a cut type that has an air gap at every turn in the magnetic path direction. Furthermore, among the iron cores having an air gap, some iron cores were produced by adjusting the gap length by the feedback method.

For each of the produced transformers, the iron loss characteristics were measured when the magnetic flux density in the iron core legs was 1.7 T at a frequency of 50 Hz. The iron loss characteristics under the conditions of a magnetic flux density of 1.7 T and a frequency of 50 Hz were measured by no-load loss using a wattmeter. At the same time, this model transformer was excited in a soundproof room under the conditions of a maximum magnetic flux density Bm = 1.7 T and a frequency of 50 Hz, and the noise level (dBA) was measured using a noise level meter.

After the various measurements were completed, a sample was cut out from the bent portion of a corner of the iron core and embedded in a carbon mold. The cross-section parallel to the rolling direction was then polished and subjected to EBSD measurement. Furthermore, the KR value was calculated from the obtained results. The results are illustrated in Tables 1 to 5 below.

**[Table 1]**

| No. | Model | Phase | Air gap | Gap length adjustment | wr | SRA | Steel sample ID | Inner peripheral film thickness | Outer peripheral film thickness | KR | BF | Noise | Notes |
|---|---|---|---|---|---|---|---|---|---|---|---|---|---|
| 1 | Tranco | three phase three leg | yes | no | 600 | yes | A | 4 | 2 | 0.8 | 1.45 | 36 | Comparative Example |
| 2 | Tranco | three phase three leg | yes | no | 600 | yes | A | 3 | 3 | 1.04 | 1.4 | 36 | Comparative Example |
| 3 | Tranco | three phase three leg | yes | yes | 400 | yes | A | 3 | 3 | 1.04 | 1.38 | 36 | Comparative Example |
| 4 | Tranco | three phase three leg | yes | no | 600 | yes | A | 2 | 4 | 1.05 | 1.33 | 36 | Present Embodiment |
| 5 | Tranco | three phase three leg | yes | yes | 500 | yes | A | 2 | 4 | 1.05 | 1.31 | 35 | Present Embodiment |
| 6 | Tranco | three phase three leg | yes | no | 600 | yes | A | 1 | 3 | 1.09 | 1.33 | 36 | Present Embodiment |
| 7 | Tranco | three phase three leg | yes | no | 600 | yes | A | 1 | 4 | 1.1 | 1.32 | 36 | Present Embodiment |
| 8 | Tranco | three phase three leg | yes | yes | 300 | yes | A | 1 | 4 | 1.1 | 1.3 | 35 | Present Embodiment |
| 9 | Tranco | three phase three leg | yes | no | 600 | yes | A | 3 | 5 | 1.5 | 1.32 | 36 | Present Embodiment |
| 10 | Tranco | three phase three leg | yes | no | 600 | yes | A | 2 | 5 | 1.51 | 1.33 | 36 | Present Embodiment |
| 11 | Tranco | three phase three leg | yes | no | 600 | yes | A | 2 | 4 | 1.6 | 1.33 | 37 | Present Embodiment |
| 12 | Tranco | three phase three leg | yes | yes | 400 | yes | A | 1 | 5 | 1.61 | 1.38 | 40 | Comparative Example |
| 13 | Tranco | three phase three leg | yes | no | 600 | yes | A | 1 | 5 | 1.61 | 1.4 | 40 | Comparative Example |
| 14 | Tranco | three phase three leg | no | no | 600 | yes | A | 4 | 2 | 0.8 | 1.45 | 36 | Comparative Example |
| 15 | Tranco | three phase three leg | no | no | 600 | yes | A | 3 | 3 | 1.04 | 1.4 | 36 | Comparative Example |
| 16 | Tranco | three phase three leg | no | no | 600 | yes | A | 2 | 4 | 1.05 | 1.35 | 36 | Present Embodiment |
| 17 | Tranco | three phase three leg | no | no | 600 | yes | A | 1 | 3 | 1.09 | 1.34 | 36 | Present Embodiment |
| 18 | Tranco | three phase three leg | no | no | 600 | yes | A | 1 | 4 | 1.1 | 1.33 | 36 | Present Embodiment |
| 19 | Tranco | three phase three leg | no | no | 600 | yes | A | 3 | 5 | 1.5 | 1.33 | 36 | Present Embodiment |
| 20 | Tranco | three phase three leg | no | no | 600 | yes | A | 2 | 5 | 1.51 | 1.34 | 36 | Present Embodiment |
| 21 | Tranco | three phase three leg | no | no | 600 | yes | A | 2 | 4 | 1.6 | 1.34 | 37 | Present Embodiment |
| 22 | Tranco | three phase three leg | no | no | 600 | yes | A | 1 | 5 | 1.61 | 1.41 | 40 | Comparative Example |
| 23 | Unicore | three phase three leg | yes | no | 600 | yes | A | 4 | 2 | 0.7 | 1.45 | 36 | Comparative Example |
| 24 | Unicore | three phase three leg | yes | yes | 400 | yes | A | 4 | 2 | 0.7 | 1.43 | 36 | Comparative Example |
| 25 | Unicore | three phase three leg | yes | no | 600 | yes | A | 3 | 3 | 1.04 | 1.4 | 36 | Comparative Example |
| 26 | Unicore | three phase three leg | yes | no | 600 | yes | A | 2 | 4 | 1.05 | 1.29 | 36 | Present Embodiment |
| 27 | Unicore | three phase three leg | yes | yes | 500 | yes | A | 2 | 4 | 1.05 | 1.27 | 35 | Present Embodiment |
| 28 | Unicore | three phase three leg | yes | no | 600 | yes | A | 1 | 3 | 1.09 | 1.29 | 36 | Present Embodiment |
| 29 | Unicore | three phase three leg | yes | no | 600 | yes | A | 1 | 4 | 1.1 | 1.28 | 36 | Present Embodiment |
| 30 | Unicore | three phase three leg | yes | yes | 300 | yes | A | 1 | 4 | 1.1 | 1.26 | 35 | Present Embodiment |
| 31 | Unicore | three phase three leg | yes | no | 600 | yes | A | 3 | 5 | 1.5 | 1.28 | 36 | Present Embodiment |
| 32 | Unicore | three phase three leg | yes | no | 600 | yes | A | 2 | 5 | 1.51 | 1.29 | 36 | Present Embodiment |
| 33 | Unicore | three phase three leg | yes | no | 600 | yes | A | 2 | 4 | 1.6 | 1.29 | 37 | Present Embodiment |
| 34 | Unicore | three phase three leg | yes | yes | 400 | yes | A | 2 | 4 | 1.61 | 1.37 | 40 | Comparative Example |
| 35 | Unicore | three phase three leg | yes | no | 600 | yes | A | 1 | 5 | 1.61 | 1.39 | 40 | Comparative Example |
| 36 | Unicore | three phase three leg | yes | no | 600 | no | A | 4 | 2 | 0.6 | 1.45 | 36 | Comparative Example |
| 37 | Unicore | three phase three leg | yes | yes | 400 | no | A | 4 | 2 | 0.6 | 1.43 | 36 | Comparative Example |
| 38 | Unicore | three phase three leg | yes | no | 600 | no | A | 3 | 3 | 1.04 | 1.4 | 36 | Comparative Example |
| 39 | Unicore | three phase three leg | yes | no | 600 | no | A | 2 | 4 | 1.05 | 1.31 | 36 | Present Embodiment |
| 40 | Unicore | three phase three leg | yes | yes | 500 | no | A | 2 | 4 | 1.05 | 1.29 | 35 | Present Embodiment |
| 41 | Unicore | three phase three leg | yes | no | 600 | no | A | 1 | 3 | 1.09 | 1.31 | 36 | Present Embodiment |
| 42 | Unicore | three phase three leg | yes | no | 600 | no | A | 1 | 4 | 1.1 | 1.3 | 36 | Present Embodiment |
| 43 | Unicore | three phase three leg | yes | yes | 300 | no | A | 1 | 4 | 1.1 | 1.28 | 35 | Present Embodiment |
| 44 | Unicore | three phase three leg | yes | no | 600 | no | A | 3 | 5 | 1.5 | 1.3 | 36 | Present Embodiment |
| 45 | Unicore | three phase three leg | yes | no | 600 | no | A | 2 | 5 | 1.51 | 1.31 | 37 | Present Embodiment |
| 46 | Unicore | three phase three leg | yes | no | 600 | no | A | 2 | 4 | 1.6 | 1.31 | 38 | Present Embodiment |
| 47 | Unicore | three phase three leg | yes | yes | 400 | no | A | 2 | 4 | 1.61 | 1.35 | 42 | Comparative Example |
| 48 | Unicore | three phase three leg | yes | no | 600 | no | A | 1 | 5 | 1.61 | 1.36 | 42 | Comparative Example |
| 49 | Unicore | three phase three leg | no | no | 600 | yes | A | 4 | 2 | 0.7 | 1.45 | 36 | Comparative Example |
| 50 | Unicore | three phase three leg | no | no | 600 | yes | A | 3 | 3 | 1.04 | 1.4 | 36 | Comparative Example |
| 51 | Unicore | three phase three leg | no | no | 600 | yes | A | 2 | 4 | 1.05 | 1.32 | 36 | Present Embodiment |
| 52 | Unicore | three phase three leg | no | no | 600 | yes | A | 1 | 3 | 1.09 | 1.32 | 36 | Present Embodiment |
| 53 | Unicore | three phase three leg | no | no | 600 | yes | A | 1 | 4 | 1.1 | 1.3 | 36 | Present Embodiment |
| 54 | Unicore | three phase three leg | no | no | 600 | yes | A | 3 | 5 | 1.5 | 1.3 | 36 | Present Embodiment |
| 55 | Unicore | three phase three leg | no | no | 600 | yes | A | 2 | 5 | 1.51 | 1.32 | 37 | Present Embodiment |
| 56 | Unicore | three phase three leg | no | no | 600 | yes | A | 2 | 4 | 1.6 | 1.33 | 38 | Present Embodiment |
| 57 | Unicore | three phase three leg | no | no | 600 | yes | A | 1 | 5 | 1.61 | 1.39 | 42 | Comparative Example |
| 58 | Unicore | three phase three leg | no | no | 600 | no | A | 4 | 2 | 0.6 | 1.45 | 36 | Comparative Example |
| 59 | Unicore | three phase three leg | no | no | 600 | no | A | 3 | 3 | 1.04 | 1.4 | 36 | Comparative Example |
| 60 | Unicore | three phase three leg | no | no | 600 | no | A | 2 | 4 | 1.05 | 1.34 | 36 | Present Embodiment |
| 61 | Unicore | three phase three leg | no | no | 600 | no | A | 1 | 3 | 1.09 | 1.34 | 36 | Present Embodiment |
| 62 | Unicore | three phase three leg | no | no | 600 | no | A | 1 | 4 | 1.1 | 1.32 | 36 | Present Embodiment |
| 63 | Unicore | three phase three leg | no | no | 600 | no | A | 3 | 5 | 1.5 | 1.32 | 36 | Present Embodiment |
| 64 | Unicore | three phase three leg | no | no | 600 | no | A | 2 | 5 | 1.51 | 1.33 | 37 | Present Embodiment |

**[Table 2]**

| No. | Model | Phase | Air gap | Gap length adjustment | wr | SRA | Steel sample ID | Inner peripheral film thickness | Outer peripheral film thickness | KR | BF | Noise | Notes |
|---|---|---|---|---|---|---|---|---|---|---|---|---|---|
| 65 | Unicore | three phase three leg | no | no | 600 | no | A | 2 | 4 | 1.6 | 1.34 | 38 | Present Embodiment |
| 66 | Unicore | three phase three leg | no | no | 600 | no | A | 1 | 5 | 1.61 | 1.38 | 42 | Comparative Example |
| 67 | Tranco | three phase three leg | yes | no | 600 | yes | B | 4 | 2 | 0.8 | 1.45 | 36 | Comparative Example |
| 68 | Tranco | three phase three leg | yes | yes | 400 | yes | B | 4 | 2 | 0.8 | 1.43 | 36 | Comparative Example |
| 69 | Tranco | three phase three leg | yes | no | 600 | yes | B | 3 | 3 | 1.04 | 1.4 | 36 | Comparative Example |
| 70 | Tranco | three phase three leg | yes | no | 600 | yes | B | 2 | 4 | 1.05 | 1.33 | 36 | Present Embodiment |
| 71 | Tranco | three phase three leg | yes | yes | 500 | yes | B | 2 | 4 | 1.05 | 1.31 | 35 | Present Embodiment |
| 72 | Tranco | three phase three leg | yes | no | 600 | yes | B | 1 | 3 | 1.09 | 1.33 | 36 | Present Embodiment |
| 73 | Tranco | three phase three leg | yes | no | 600 | yes | B | 1 | 4 | 1.1 | 1.32 | 36 | Present Embodiment |
| 74 | Tranco | three phase three leg | yes | yes | 300 | yes | B | 1 | 4 | 1.1 | 1.3 | 35 | Present Embodiment |
| 75 | Tranco | three phase three leg | yes | no | 600 | yes | B | 3 | 5 | 1.5 | 1.32 | 36 | Present Embodiment |
| 76 | Tranco | three phase three leg | yes | no | 600 | yes | B | 2 | 5 | 1.51 | 1.33 | 37 | Present Embodiment |
| 77 | Tranco | three phase three leg | yes | no | 600 | yes | B | 2 | 4 | 1.6 | 1.34 | 38 | Present Embodiment |
| 78 | Tranco | three phase three leg | yes | yes | 400 | yes | B | 2 | 4 | 1.61 | 1.37 | 42 | Comparative Example |
| 79 | Tranco | three phase three leg | yes | no | 600 | yes | B | 1 | 5 | 1.61 | 1.39 | 42 | Comparative Example |
| 80 | Tranco | three phase three leg | no | no | 600 | yes | B | 4 | 2 | 0.8 | 1.45 | 36 | Comparative Example |
| 81 | Tranco | three phase three leg | no | no | 600 | yes | B | 3 | 3 | 1.04 | 1.4 | 36 | Comparative Example |
| 82 | Tranco | three phase three leg | no | no | 600 | yes | B | 2 | 4 | 1.05 | 1.35 | 36 | Present Embodiment |
| 83 | Tranco | three phase three leg | no | no | 600 | yes | B | 1 | 3 | 1.09 | 1.35 | 36 | Present Embodiment |
| 84 | Tranco | three phase three leg | no | no | 600 | yes | B | 1 | 4 | 1.1 | 1.33 | 36 | Present Embodiment |
| 85 | Tranco | three phase three leg | no | no | 600 | yes | B | 3 | 5 | 1.5 | 1.33 | 36 | Present Embodiment |
| 86 | Tranco | three phase three leg | no | no | 600 | yes | B | 2 | 5 | 1.51 | 1.34 | 37 | Present Embodiment |
| 87 | Tranco | three phase three leg | no | no | 600 | yes | B | 2 | 4 | 1.6 | 1.34 | 38 | Present Embodiment |
| 88 | Tranco | three phase three leg | no | no | 600 | yes | B | 1 | 5 | 1.61 | 1.39 | 42 | Comparative Example |
| 89 | Unicore | three phase three leg | yes | no | 600 | yes | B | 4 | 2 | 0.7 | 1.45 | 36 | Comparative Example |
| 90 | Unicore | three phase three leg | yes | no | 600 | yes | B | 3 | 3 | 1.04 | 1.4 | 36 | Comparative Example |
| 91 | Unicore | three phase three leg | yes | yes | 400 | yes | B | 3 | 3 | 1.04 | 1.38 | 36 | Comparative Example |
| 92 | Unicore | three phase three leg | yes | no | 600 | yes | B | 2 | 4 | 1.05 | 1.3 | 36 | Present Embodiment |
| 93 | Unicore | three phase three leg | yes | yes | 500 | yes | B | 2 | 4 | 1.05 | 1.28 | 35 | Present Embodiment |
| 94 | Unicore | three phase three leg | yes | no | 600 | yes | B | 1 | 3 | 1.09 | 1.3 | 36 | Present Embodiment |
| 95 | Unicore | three phase three leg | yes | no | 600 | yes | B | 1 | 4 | 1.1 | 1.28 | 36 | Present Embodiment |
| 96 | Unicore | three phase three leg | yes | yes | 300 | yes | B | 1 | 4 | 1.1 | 1.26 | 35 | Present Embodiment |
| 97 | Unicore | three phase three leg | yes | no | 600 | yes | B | 3 | 5 | 1.5 | 1.28 | 36 | Present Embodiment |
| 98 | Unicore | three phase three leg | yes | no | 600 | yes | B | 2 | 5 | 1.51 | 1.3 | 37 | Present Embodiment |
| 99 | Unicore | three phase three leg | yes | no | 600 | yes | B | 2 | 4 | 1.6 | 1.3 | 38 | Present Embodiment |
| 100 | Unicore | three phase three leg | yes | yes | 400 | yes | B | 1 | 5 | 1.61 | 1.37 | 42 | Comparative Example |
| 101 | Unicore | three phase three leg | yes | no | 600 | yes | B | 1 | 5 | 1.61 | 1.37 | 42 | Comparative Example |
| 102 | Unicore | three phase three leg | yes | no | 600 | no | B | 4 | 2 | 0.6 | 1.45 | 36 | Comparative Example |
| 103 | Unicore | three phase three leg | yes | yes | 400 | no | B | 4 | 2 | 0.6 | 1.43 | 36 | Comparative Example |
| 104 | Unicore | three phase three leg | yes | no | 600 | no | B | 3 | 3 | 1.04 | 1.4 | 36 | Comparative Example |
| 105 | Unicore | three phase three leg | yes | no | 600 | no | B | 2 | 4 | 1.05 | 1.32 | 36 | Present Embodiment |
| 106 | Unicore | three phase three leg | yes | yes | 500 | no | B | 2 | 4 | 1.05 | 1.3 | 35 | Present Embodiment |
| 107 | Unicore | three phase three leg | yes | no | 600 | no | B | 1 | 3 | 1.09 | 1.32 | 36 | Present Embodiment |
| 108 | Unicore | three phase three leg | yes | no | 600 | no | B | 1 | 4 | 1.1 | 1.3 | 36 | Present Embodiment |
| 109 | Unicore | three phase three leg | yes | yes | 300 | no | B | 1 | 4 | 1.1 | 1.28 | 35 | Present Embodiment |
| 110 | Unicore | three phase three leg | yes | no | 600 | no | B | 3 | 5 | 1.5 | 1.3 | 36 | Present Embodiment |
| 111 | Unicore | three phase three leg | yes | no | 600 | no | B | 2 | 5 | 1.51 | 1.31 | 37 | Present Embodiment |
| 112 | Unicore | three phase three leg | yes | no | 600 | no | B | 2 | 4 | 1.6 | 1.31 | 38 | Present Embodiment |
| 113 | Unicore | three phase three leg | yes | yes | 400 | no | B | 2 | 4 | 1.61 | 1.35 | 42 | Comparative Example |
| 114 | Unicore | three phase three leg | yes | no | 600 | no | B | 1 | 5 | 1.61 | 1.36 | 42 | Comparative Example |
| 115 | Unicore | three phase three leg | no | no | 600 | yes | B | 4 | 2 | 0.7 | 1.45 | 36 | Comparative Example |
| 116 | Unicore | three phase three leg | no | no | 600 | yes | B | 3 | 3 | 1.04 | 1.4 | 36 | Comparative Example |
| 117 | Unicore | three phase three leg | no | no | 600 | yes | B | 2 | 4 | 1.05 | 1.32 | 36 | Present Embodiment |
| 118 | Unicore | three phase three leg | no | no | 600 | yes | B | 1 | 3 | 1.09 | 1.32 | 36 | Present Embodiment |
| 119 | Unicore | three phase three leg | no | no | 600 | yes | B | 1 | 4 | 1.1 | 1.3 | 36 | Present Embodiment |
| 120 | Unicore | three phase three leg | no | no | 600 | yes | B | 3 | 5 | 1.5 | 1.3 | 36 | Present Embodiment |
| 121 | Unicore | three phase three leg | no | no | 600 | yes | B | 2 | 5 | 1.51 | 1.31 | 37 | Present Embodiment |
| 122 | Unicore | three phase three leg | no | no | 600 | yes | B | 2 | 4 | 1.6 | 1.31 | 38 | Present Embodiment |
| 123 | Unicore | three phase three leg | no | no | 600 | yes | B | 1 | 5 | 1.61 | 1.38 | 42 | Comparative Example |
| 124 | Unicore | three phase three leg | no | no | 600 | no | B | 4 | 2 | 0.6 | 1.45 | 36 | Comparative Example |
| 125 | Unicore | three phase three leg | no | no | 600 | no | B | 3 | 3 | 1.04 | 1.4 | 36 | Comparative Example |
| 126 | Unicore | three phase three leg | no | no | 600 | no | B | 2 | 4 | 1.05 | 1.33 | 36 | Present Embodiment |
| 127 | Unicore | three phase three leg | no | no | 600 | no | B | 1 | 3 | 1.09 | 1.33 | 36 | Present Embodiment |
| 128 | Unicore | three phase three leg | no | no | 600 | no | B | 1 | 4 | 1.1 | 1.31 | 36 | Present Embodiment |

**[Table 3]**

| No. | Model | Phase | Air gap | Gap length adjustment | wr | SRA | Steel sample ID | Inner peripheral film thickness | Outer peripheral film thickness | KR | BF | Noise | Notes |
|---|---|---|---|---|---|---|---|---|---|---|---|---|---|
| 129 | Unicore | three phase three leg | no | no | 600 | no | B | 3 | 5 | 1.5 | 1.31 | 36 | Present Embodiment |
| 130 | Unicore | three phase three leg | no | no | 600 | no | B | 2 | 5 | 1.51 | 1.33 | 37 | Present Embodiment |
| 131 | Unicore | three phase three leg | no | no | 600 | no | B | 2 | 4 | 1.6 | 1.33 | 38 | Present Embodiment |
| 132 | Unicore | three phase three leg | no | no | 600 | no | B | 1 | 5 | 1.61 | 1.38 | 42 | Comparative Example |
| 133 | Unicore | three phase three leg | yes | no | 600 | no | C | 4 | 2 | 0.6 | 1.45 | 36 | Comparative Example |
| 134 | Unicore | three phase three leg | yes | yes | 400 | no | C | 4 | 2 | 0.6 | 1.43 | 36 | Comparative Example |
| 135 | Unicore | three phase three leg | yes | no | 600 | no | C | 3 | 3 | 1.04 | 1.4 | 36 | Comparative Example |
| 136 | Unicore | three phase three leg | yes | no | 600 | no | C | 2 | 4 | 1.05 | 1.31 | 36 | Present Embodiment |
| 137 | Unicore | three phase three leg | yes | yes | 500 | no | C | 2 | 4 | 1.05 | 1.29 | 35 | Present Embodiment |
| 138 | Unicore | three phase three leg | yes | no | 600 | no | C | 1 | 3 | 1.09 | 1.31 | 36 | Present Embodiment |
| 139 | Unicore | three phase three leg | yes | no | 600 | no | C | 1 | 4 | 1.1 | 1.29 | 36 | Present Embodiment |
| 140 | Unicore | three phase three leg | yes | yes | 300 | no | C | 1 | 4 | 1.1 | 1.27 | 35 | Present Embodiment |
| 141 | Unicore | three phase three leg | yes | no | 600 | no | C | 3 | 5 | 1.5 | 1.29 | 36 | Present Embodiment |
| 142 | Unicore | three phase three leg | yes | no | 600 | no | C | 2 | 5 | 1.51 | 1.31 | 37 | Present Embodiment |
| 143 | Unicore | three phase three leg | yes | no | 600 | no | C | 2 | 4 | 1.6 | 1.32 | 38 | Present Embodiment |
| 144 | Unicore | three phase three leg | yes | yes | 400 | no | C | 1 | 5 | 1.61 | 1.35 | 42 | Comparative Example |
| 145 | Unicore | three phase three leg | yes | no | 600 | no | C | 1 | 5 | 1.61 | 1.36 | 42 | Comparative Example |
| 146 | Unicore | three phase three leg | no | no | 600 | no | C | 4 | 2 | 0.6 | 1.45 | 36 | Comparative Example |
| 147 | Unicore | three phase three leg | no | no | 600 | no | C | 3 | 3 | 1.04 | 1.4 | 36 | Comparative Example |
| 148 | Unicore | three phase three leg | no | no | 600 | no | C | 2 | 4 | 1.05 | 1.33 | 36 | Present Embodiment |
| 149 | Unicore | three phase three leg | no | no | 600 | no | C | 1 | 3 | 1.09 | 1.33 | 36 | Present Embodiment |
| 150 | Unicore | three phase three leg | no | no | 600 | no | C | 1 | 4 | 1.1 | 1.31 | 36 | Present Embodiment |
| 151 | Unicore | three phase three leg | no | no | 600 | no | C | 3 | 5 | 1.5 | 1.31 | 36 | Present Embodiment |
| 152 | Unicore | three phase three leg | no | no | 600 | no | C | 2 | 5 | 1.51 | 1.32 | 37 | Present Embodiment |
| 153 | Unicore | three phase three leg | no | no | 600 | no | C | 2 | 4 | 1.6 | 1.33 | 38 | Present Embodiment |
| 154 | Unicore | three phase three leg | no | no | 600 | no | C | 1 | 5 | 1.61 | 1.38 | 42 | Comparative Example |
| 155 | Unicore | three phase three leg | yes | no | 600 | no | D | 4 | 2 | 0.6 | 1.45 | 36 | Comparative Example |
| 156 | Unicore | three phase three leg | yes | yes | 400 | no | D | 4 | 2 | 0.6 | 1.43 | 36 | Comparative Example |
| 157 | Unicore | three phase three leg | yes | no | 600 | no | D | 3 | 3 | 1.04 | 1.4 | 36 | Comparative Example |
| 158 | Unicore | three phase three leg | yes | no | 600 | no | D | 2 | 4 | 1.05 | 1.31 | 36 | Present Embodiment |
| 159 | Unicore | three phase three leg | yes | yes | 500 | no | D | 2 | 4 | 1.05 | 1.29 | 35 | Present Embodiment |
| 160 | Unicore | three phase three leg | yes | no | 600 | no | D | 1 | 3 | 1.09 | 1.31 | 36 | Present Embodiment |
| 161 | Unicore | three phase three leg | yes | no | 600 | no | D | 1 | 4 | 1.1 | 1.29 | 36 | Present Embodiment |
| 162 | Unicore | three phase three leg | yes | yes | 300 | no | D | 1 | 4 | 1.1 | 1.27 | 35 | Present Embodiment |
| 163 | Unicore | three phase three leg | yes | no | 600 | no | D | 3 | 5 | 1.5 | 1.29 | 36 | Present Embodiment |
| 164 | Unicore | three phase three leg | yes | no | 600 | no | D | 2 | 5 | 1.51 | 1.3 | 37 | Present Embodiment |
| 165 | Unicore | three phase three leg | yes | no | 600 | no | D | 2 | 4 | 1.6 | 1.31 | 38 | Present Embodiment |
| 166 | Unicore | three phase three leg | yes | yes | 400 | no | D | 1 | 5 | 1.61 | 1.35 | 42 | Comparative Example |
| 167 | Unicore | three phase three leg | yes | no | 600 | no | D | 1 | 5 | 1.61 | 1.36 | 42 | Comparative Example |
| 168 | Unicore | three phase three leg | no | no | 600 | no | D | 4 | 2 | 0.6 | 1.45 | 36 | Comparative Example |
| 169 | Unicore | three phase three leg | no | no | 600 | no | D | 3 | 3 | 1.04 | 1.4 | 36 | Comparative Example |
| 170 | Unicore | three phase three leg | no | no | 600 | no | D | 2 | 4 | 1.05 | 1.33 | 36 | Present Embodiment |
| 171 | Unicore | three phase three leg | no | no | 600 | no | D | 1 | 3 | 1.09 | 1.33 | 36 | Present Embodiment |
| 172 | Unicore | three phase three leg | no | no | 600 | no | D | 1 | 4 | 1.1 | 1.31 | 36 | Present Embodiment |
| 173 | Unicore | three phase three leg | no | no | 600 | no | D | 3 | 5 | 1.5 | 1.31 | 36 | Present Embodiment |
| 174 | Unicore | three phase three leg | no | no | 600 | no | D | 2 | 5 | 1.51 | 1.32 | 37 | Present Embodiment |
| 175 | Unicore | three phase three leg | no | no | 600 | no | D | 2 | 4 | 1.6 | 1.33 | 38 | Present Embodiment |
| 176 | Unicore | three phase three leg | no | no | 600 | no | D | 1 | 5 | 1.61 | 1.38 | 42 | Comparative Example |
| 177 | Tranco | single phase | yes | no | 110 | yes | A | 3 | 3 | 1.04 | 1.3 | 36 | Comparative Example |
| 178 | Tranco | single phase | yes | yes | 100 | yes | A | 3 | 3 | 1.04 | 1.28 | 36 | Comparative Example |
| 179 | Tranco | single phase | yes | no | 110 | yes | A | 2 | 4 | 1.05 | 1.2 | 36 | Present Embodiment |
| 180 | Tranco | single phase | yes | yes | 60 | yes | A | 2 | 4 | 1.05 | 1.18 | 35 | Present Embodiment |
| 181 | Tranco | single phase | yes | no | 110 | yes | A | 1 | 4 | 1.1 | 1.18 | 36 | Present Embodiment |
| 182 | Tranco | single phase | yes | yes | 80 | yes | A | 1 | 4 | 1.1 | 1.16 | 35 | Present Embodiment |
| 183 | Tranco | single phase | yes | yes | 80 | yes | A | 1 | 5 | 1.61 | 1.27 | 42 | Comparative Example |
| 184 | Tranco | single phase | yes | no | 110 | yes | A | 1 | 5 | 1.61 | 1.27 | 42 | Comparative Example |
| 185 | Unicore | single phase | yes | no | 110 | yes | A | 4 | 2 | 0.7 | 1.35 | 36 | Comparative Example |
| 186 | Unicore | single phase | yes | yes | 100 | yes | A | 4 | 2 | 0.7 | 1.33 | 36 | Comparative Example |
| 187 | Unicore | single phase | yes | no | 110 | yes | A | 2 | 4 | 1.05 | 1.22 | 36 | Present Embodiment |
| 188 | Unicore | single phase | yes | yes | 60 | yes | A | 2 | 4 | 1.05 | 1.2 | 35 | Present Embodiment |
| 189 | Unicore | single phase | yes | no | 110 | yes | A | 1 | 4 | 1.1 | 1.2 | 36 | Present Embodiment |
| 190 | Unicore | single phase | yes | yes | 80 | yes | A | 1 | 4 | 1.1 | 1.18 | 35 | Present Embodiment |
| 191 | Unicore | single phase | yes | yes | 80 | yes | A | 1 | 5 | 1.61 | 1.26 | 42 | Comparative Example |
| 192 | Unicore | single phase | yes | no | 110 | yes | A | 1 | 5 | 1.61 | 1.26 | 42 | Comparative Example |

**[Table 4]**

| No. | Model | Phase | Air gap | Gap length adjustment | wr | SRA | Steel sample ID | Inner peripheral film thickness | Outer peripheral film thickness | KR | BF | Noise | Notes |
|---|---|---|---|---|---|---|---|---|---|---|---|---|---|
| 193 | Unicore | single phase | yes | no | 110 | no | A | 4 | 2 | 0.6 | 1.35 | 36 | Comparative Example |
| 194 | Unicore | single phase | yes | yes | 100 | no | A | 4 | 2 | 0.6 | 1.33 | 36 | Comparative Example |
| 195 | Unicore | single phase | yes | no | 110 | no | A | 2 | 4 | 1.05 | 1.21 | 36 | Present Embodiment |
| 196 | Unicore | single phase | yes | yes | 60 | no | A | 2 | 4 | 1.05 | 1.19 | 35 | Present Embodiment |
| 197 | Unicore | single phase | yes | no | 110 | no | A | 1 | 4 | 1.1 | 1.19 | 36 | Present Embodiment |
| 198 | Unicore | single phase | yes | yes | 80 | no | A | 1 | 4 | 1.1 | 1.17 | 35 | Present Embodiment |
| 199 | Unicore | single phase | yes | yes | 80 | no | A | 1 | 5 | 1.61 | 1.26 | 42 | Comparative Example |
| 200 | Unicore | single phase | yes | no | 110 | no | A | 1 | 5 | 1.61 | 1.26 | 42 | Comparative Example |
| 201 | Tranco | single phase | yes | no | 110 | yes | B | 4 | 2 | 0.8 | 1.35 | 36 | Comparative Example |
| 202 | Tranco | single phase | yes | yes | 100 | yes | B | 4 | 2 | 0.8 | 1.33 | 36 | Comparative Example |
| 203 | Tranco | single phase | yes | no | 110 | yes | B | 2 | 4 | 1.05 | 1.21 | 36 | Present Embodiment |
| 204 | Tranco | single phase | yes | yes | 60 | yes | B | 2 | 4 | 1.05 | 1.19 | 35 | Present Embodiment |
| 205 | Tranco | single phase | yes | no | 110 | yes | B | 1 | 4 | 1.1 | 1.19 | 36 | Present Embodiment |
| 206 | Tranco | single phase | yes | yes | 80 | yes | B | 1 | 4 | 1.1 | 1.17 | 35 | Present Embodiment |
| 207 | Tranco | single phase | yes | yes | 80 | yes | B | 1 | 5 | 1.61 | 1.26 | 42 | Comparative Example |
| 208 | Tranco | single phase | yes | no | 110 | yes | B | 1 | 5 | 1.61 | 1.26 | 42 | Comparative Example |
| 209 | Unicore | single phase | yes | no | 110 | yes | B | 3 | 3 | 1.04 | 1.3 | 36 | Comparative Example |
| 210 | Unicore | single phase | yes | yes | 100 | yes | B | 3 | 3 | 1.04 | 1.28 | 36 | Comparative Example |
| 211 | Unicore | single phase | yes | no | 110 | yes | B | 2 | 4 | 1.05 | 1.2 | 36 | Present Embodiment |
| 212 | Unicore | single phase | yes | yes | 60 | yes | B | 2 | 4 | 1.05 | 1.18 | 35 | Present Embodiment |
| 213 | Unicore | single phase | yes | no | 110 | yes | B | 1 | 4 | 1.1 | 1.18 | 36 | Present Embodiment |
| 214 | Unicore | single phase | yes | yes | 80 | yes | B | 1 | 4 | 1.1 | 1.16 | 35 | Present Embodiment |
| 215 | Unicore | single phase | yes | yes | 80 | yes | B | 1 | 5 | 1.61 | 1.27 | 42 | Comparative Example |
| 216 | Unicore | single phase | yes | no | 110 | yes | B | 1 | 5 | 1.61 | 1.27 | 42 | Comparative Example |
| 217 | Unicore | single phase | yes | no | 110 | no | B | 4 | 2 | 0.6 | 1.35 | 36 | Comparative Example |
| 218 | Unicore | single phase | yes | yes | 100 | no | B | 4 | 2 | 0.6 | 1.33 | 36 | Comparative Example |
| 219 | Unicore | single phase | yes | no | 110 | no | B | 2 | 4 | 1.05 | 1.22 | 36 | Present Embodiment |
| 220 | Unicore | single phase | yes | yes | 60 | no | B | 2 | 4 | 1.05 | 1.2 | 35 | Present Embodiment |
| 221 | Unicore | single phase | yes | no | 110 | no | B | 1 | 4 | 1.1 | 1.2 | 36 | Present Embodiment |
| 222 | Unicore | single phase | yes | yes | 80 | no | B | 1 | 4 | 1.1 | 1.18 | 35 | Present Embodiment |
| 223 | Unicore | single phase | yes | yes | 80 | no | B | 1 | 5 | 1.61 | 1.26 | 42 | Comparative Example |
| 224 | Unicore | single phase | yes | no | 110 | no | B | 1 | 5 | 1.61 | 1.26 | 42 | Comparative Example |
| 225 | Unicore | single phase | yes | no | 110 | no | C | 4 | 2 | 0.6 | 1.35 | 36 | Comparative Example |
| 226 | Unicore | single phase | yes | yes | 100 | no | C | 4 | 2 | 0.6 | 1.33 | 36 | Comparative Example |
| 227 | Unicore | single phase | yes | no | 110 | no | C | 2 | 4 | 1.05 | 1.21 | 36 | Present Embodiment |
| 228 | Unicore | single phase | yes | yes | 60 | no | C | 2 | 4 | 1.05 | 1.19 | 35 | Present Embodiment |
| 229 | Unicore | single phase | yes | no | 110 | no | C | 1 | 4 | 1.1 | 1.19 | 36 | Present Embodiment |
| 230 | Unicore | single phase | yes | yes | 80 | no | C | 1 | 4 | 1.1 | 1.17 | 35 | Present Embodiment |
| 231 | Unicore | single phase | yes | yes | 80 | no | C | 1 | 5 | 1.61 | 1.26 | 42 | Comparative Example |
| 232 | Unicore | single phase | yes | no | 110 | no | C | 1 | 5 | 1.61 | 1.26 | 42 | Comparative Example |
| 233 | Unicore | single phase | yes | no | 110 | no | D | 4 | 2 | 0.6 | 1.35 | 36 | Comparative Example |
| 234 | Unicore | single phase | yes | yes | 100 | no | D | 4 | 2 | 0.6 | 1.33 | 36 | Comparative Example |
| 235 | Unicore | single phase | yes | no | 110 | no | D | 2 | 4 | 1.05 | 1.21 | 36 | Present Embodiment |
| 236 | Unicore | single phase | yes | yes | 60 | no | D | 2 | 4 | 1.05 | 1.19 | 35 | Present Embodiment |
| 237 | Unicore | single phase | yes | no | 110 | no | D | 1 | 4 | 1.1 | 1.19 | 36 | Present Embodiment |
| 238 | Unicore | single phase | yes | yes | 80 | no | D | 1 | 4 | 1.1 | 1.17 | 35 | Present Embodiment |
| 239 | Unicore | single phase | yes | yes | 80 | no | D | 1 | 5 | 1.61 | 1.26 | 42 | Comparative Example |
| 240 | Unicore | single phase | yes | no | 110 | no | D | 1 | 5 | 1.61 | 1.26 | 42 | Comparative Example |
| 241 | Tranco | three phase five leg | yes | no | 110 | yes | A | 3 | 3 | 1.04 | 1.3 | 36 | Comparative Example |
| 242 | Tranco | three phase five leg | yes | yes | 100 | yes | A | 3 | 3 | 1.04 | 1.28 | 36 | Comparative Example |
| 243 | Tranco | three phase five leg | yes | no | 110 | yes | A | 2 | 4 | 1.05 | 1.2 | 36 | Present Embodiment |
| 244 | Tranco | three phase five leg | yes | yes | 60 | yes | A | 2 | 4 | 1.05 | 1.18 | 35 | Present Embodiment |
| 245 | Tranco | three phase five leg | yes | no | 110 | yes | A | 1 | 4 | 1.1 | 1.18 | 36 | Present Embodiment |
| 246 | Tranco | three phase five leg | yes | yes | 80 | yes | A | 1 | 4 | 1.1 | 1.16 | 35 | Present Embodiment |
| 247 | Tranco | three phase five leg | yes | yes | 80 | yes | A | 1 | 5 | 1.61 | 1.27 | 42 | Comparative Example |
| 248 | Tranco | three phase five leg | yes | no | 110 | yes | A | 1 | 5 | 1.61 | 1.27 | 42 | Comparative Example |
| 249 | Unicore | three phase five leg | yes | no | 110 | yes | A | 4 | 2 | 0.7 | 1.35 | 36 | Comparative Example |
| 250 | Unicore | three phase five leg | yes | yes | 100 | yes | A | 4 | 2 | 0.7 | 1.33 | 36 | Comparative Example |
| 251 | Unicore | three phase five leg | yes | no | 110 | yes | A | 2 | 4 | 1.05 | 1.22 | 36 | Present Embodiment |
| 252 | Unicore | three phase five leg | yes | yes | 60 | yes | A | 2 | 4 | 1.05 | 1.2 | 35 | Present Embodiment |
| 253 | Unicore | three phase five leg | yes | no | 110 | yes | A | 1 | 4 | 1.1 | 1.2 | 36 | Present Embodiment |
| 254 | Unicore | three phase five leg | yes | yes | 80 | yes | A | 1 | 4 | 1.1 | 1.18 | 35 | Present Embodiment |
| 255 | Unicore | three phase five leg | yes | yes | 80 | yes | A | 1 | 5 | 1.61 | 1.26 | 42 | Comparative Example |
| 256 | Unicore | three phase five leg | yes | no | 110 | yes | A | 1 | 5 | 1.61 | 1.26 | 42 | Comparative Example |

**[Table 5]**

| No. | Model | Phase | Air gap | Gap length adjustment | wr | SRA | Steel sample ID | Inner peripheral film thickness | Outer peripheral film thickness | KR | BF | Noise | Notes |
|---|---|---|---|---|---|---|---|---|---|---|---|---|---|
| 257 | Unicore | three phase five leg | yes | no | 110 | no | A | 4 | 2 | 0.6 | 1.35 | 36 | Comparative Example |
| 258 | Unicore | three phase five leg | yes | yes | 100 | no | A | 4 | 2 | 0.6 | 1.33 | 36 | Comparative Example |
| 259 | Unicore | three phase five leg | yes | no | 110 | no | A | 2 | 4 | 1.05 | 1.21 | 36 | Present Embodiment |
| 260 | Unicore | three phase five leg | yes | yes | 60 | no | A | 2 | 4 | 1.05 | 1.19 | 35 | Present Embodiment |
| 261 | Unicore | three phase five leg | yes | no | 110 | no | A | 1 | 4 | 1.1 | 1.19 | 36 | Present Embodiment |
| 262 | Unicore | three phase five leg | yes | yes | 80 | no | A | 1 | 4 | 1.1 | 1.17 | 35 | Present Embodiment |
| 263 | Unicore | three phase five leg | yes | yes | 80 | no | A | 1 | 5 | 1.61 | 1.26 | 42 | Comparative Example |
| 264 | Unicore | three phase five leg | yes | no | 110 | no | A | 1 | 5 | 1.61 | 1.26 | 42 | Comparative Example |
| 265 | Tranco | three phase five leg | yes | no | 110 | yes | B | 4 | 2 | 0.8 | 1.35 | 36 | Comparative Example |
| 266 | Tranco | three phase five leg | yes | yes | 100 | yes | B | 4 | 2 | 0.8 | 1.33 | 36 | Comparative Example |
| 267 | Tranco | three phase five leg | yes | no | 110 | yes | B | 2 | 4 | 1.05 | 1.21 | 36 | Present Embodiment |
| 268 | Tranco | three phase five leg | yes | yes | 60 | yes | B | 2 | 4 | 1.05 | 1.19 | 35 | Present Embodiment |
| 269 | Tranco | three phase five leg | yes | no | 110 | yes | B | 1 | 4 | 1.1 | 1.19 | 36 | Present Embodiment |
| 270 | Tranco | three phase five leg | yes | yes | 80 | yes | B | 1 | 4 | 1.1 | 1.17 | 35 | Present Embodiment |
| 271 | Tranco | three phase five leg | yes | yes | 80 | yes | B | 1 | 5 | 1.61 | 1.26 | 42 | Comparative Example |
| 272 | Tranco | three phase five leg | yes | no | 110 | yes | B | 1 | 5 | 1.61 | 1.26 | 42 | Comparative Example |
| 273 | Unicore | three phase five leg | yes | no | 110 | yes | B | 3 | 3 | 1.04 | 1.3 | 36 | Comparative Example |
| 274 | Unicore | three phase five leg | yes | yes | 100 | yes | B | 3 | 3 | 1.04 | 1.28 | 36 | Comparative Example |
| 275 | Unicore | three phase five leg | yes | no | 110 | yes | B | 2 | 4 | 1.05 | 1.2 | 36 | Present Embodiment |
| 276 | Unicore | three phase five leg | yes | yes | 60 | yes | B | 2 | 4 | 1.05 | 1.18 | 35 | Present Embodiment |
| 277 | Unicore | three phase five leg | yes | no | 110 | yes | B | 1 | 4 | 1.1 | 1.18 | 36 | Present Embodiment |
| 278 | Unicore | three phase five leg | yes | yes | 80 | yes | B | 1 | 4 | 1.1 | 1.16 | 35 | Present Embodiment |
| 279 | Unicore | three phase five leg | yes | yes | 80 | yes | B | 1 | 5 | 1.61 | 1.27 | 42 | Comparative Example |
| 280 | Unicore | three phase five leg | yes | no | 110 | yes | B | 1 | 5 | 1.61 | 1.27 | 42 | Comparative Example |
| 281 | Unicore | three phase five leg | yes | no | 110 | no | B | 4 | 2 | 0.6 | 1.35 | 36 | Comparative Example |
| 282 | Unicore | three phase five leg | yes | yes | 100 | no | B | 4 | 2 | 0.6 | 1.33 | 36 | Comparative Example |
| 283 | Unicore | three phase five leg | yes | no | 110 | no | B | 2 | 4 | 1.05 | 1.22 | 36 | Present Embodiment |
| 284 | Unicore | three phase five leg | yes | yes | 60 | no | B | 2 | 4 | 1.05 | 1.2 | 35 | Present Embodiment |
| 285 | Unicore | three phase five leg | yes | no | 110 | no | B | 1 | 4 | 1.1 | 1.2 | 36 | Present Embodiment |
| 286 | Unicore | three phase five leg | yes | yes | 80 | no | B | 1 | 4 | 1.1 | 1.18 | 35 | Present Embodiment |
| 287 | Unicore | three phase five leg | yes | yes | 80 | no | B | 1 | 5 | 1.61 | 1.26 | 42 | Comparative Example |
| 288 | Unicore | three phase five leg | yes | no | 110 | no | B | 1 | 5 | 1.61 | 1.26 | 42 | Comparative Example |
| 289 | Unicore | three phase five leg | yes | no | 110 | no | C | 4 | 2 | 0.6 | 1.35 | 36 | Comparative Example |
| 290 | Unicore | three phase five leg | yes | yes | 100 | no | C | 4 | 2 | 0.6 | 1.33 | 36 | Comparative Example |
| 291 | Unicore | three phase five leg | yes | no | 110 | no | C | 2 | 4 | 1.05 | 1.21 | 36 | Present Embodiment |
| 292 | Unicore | three phase five leg | yes | yes | 60 | no | C | 2 | 4 | 1.05 | 1.19 | 35 | Present Embodiment |
| 293 | Unicore | three phase five leg | yes | no | 110 | no | C | 1 | 4 | 1.1 | 1.19 | 36 | Present Embodiment |
| 294 | Unicore | three phase five leg | yes | yes | 80 | no | C | 1 | 4 | 1.1 | 1.17 | 35 | Present Embodiment |
| 295 | Unicore | three phase five leg | yes | yes | 80 | no | C | 1 | 5 | 1.61 | 1.26 | 42 | Comparative Example |
| 296 | Unicore | three phase five leg | yes | no | 110 | no | C | 1 | 5 | 1.61 | 1.26 | 42 | Comparative Example |
| 297 | Unicore | three phase five leg | yes | no | 110 | no | D | 4 | 2 | 0.6 | 1.35 | 36 | Comparative Example |
| 298 | Unicore | three phase five leg | yes | yes | 100 | no | D | 4 | 2 | 0.6 | 1.33 | 36 | Comparative Example |
| 299 | Unicore | three phase five leg | yes | no | 110 | no | D | 2 | 4 | 1.05 | 1.21 | 36 | Present Embodiment |
| 300 | Unicore | three phase five leg | yes | yes | 60 | no | D | 2 | 4 | 1.05 | 1.19 | 35 | Present Embodiment |
| 301 | Unicore | three phase five leg | yes | no | 110 | no | D | 1 | 4 | 1.1 | 1.19 | 36 | Present Embodiment |
| 302 | Unicore | three phase five leg | yes | yes | 80 | no | D | 1 | 4 | 1.1 | 1.17 | 35 | Present Embodiment |
| 303 | Unicore | three phase five leg | yes | yes | 80 | no | D | 1 | 5 | 1.61 | 1.26 | 42 | Comparative Example |
| 304 | Unicore | three phase five leg | yes | no | 110 | no | D | 1 | 5 | 1.61 | 1.26 | 42 | Comparative Example |

From Tables 1 to 5, it can be seen that under conditions satisfying the configuration of the present embodiment, a good transformer that achieves low iron loss and low noise can be obtained. It can also be seen that Unicore has a greater effect on improving BF than Tranco. In particular, when KR is 1.1 or more and 1.5 or less, the improvement in the transformer characteristics is significant. Furthermore, the cut core achieves better characteristics than the non-cut core. Unicore achieves better characteristics than Tranco. Additionally, it was confirmed that better characteristics could be obtained by adjusting the gap length so that the ratio wr of the maximum value to the minimum value of the gap length w of the discontinuous portions of all the grain-oriented electrical steel sheets forming the wound iron core was 100 or less for a single-phase/three-phase five-leg wound iron core and 500 or less for a three-phase three-leg wound iron core.

The present disclosure is not limited to the embodiments described above. For example, a plurality of blocks described in the block diagrams may be integrated, or a block may be divided. Instead of executing a plurality of steps described in the flowcharts in chronological order in accordance with the description, the plurality of steps may be executed in parallel or in a different order according to the processing capability of the apparatus that executes each step, or as required. Other modifications can be made without departing from the spirit of the present disclosure.

### REFERENCE SIGNS LIST

- 1: Transformer
- 10: Wound iron core
- 11: Grain-oriented electrical steel sheet
- 12: Corner
- 20: Coil

## Claims

1. A wound iron core configured by winding a grain-oriented electrical steel sheet in a rolling direction, wherein
in a cross-section parallel to the rolling direction at a bent portion of a corner of the wound iron core,
Kout is an average value of KAM values in a region from a center of thickness of the grain-oriented electrical steel sheet to an outer peripheral side of the wound iron core,
Kin is an average value of KAM values in a region from the center of thickness of the grain-oriented electrical steel sheet to an inner peripheral side of the wound iron core, and
KR defined as KR = Kin/Kout is 1.05 or more and 1.6 or less.

2. The wound iron core according to claim 1, wherein the KR is 1.1 or more and 1.5 or less.

3. The wound iron core according to claim 1 or 2, wherein the corner includes an angled portion.

4. The wound iron core according to any one of claims 1 to 3, comprising at least one discontinuous portion of the grain-oriented electrical steel sheet in a magnetic path direction.

5. A transformer comprising the wound iron core according to any one of claims 1 to 4 and a coil.

6. The wound iron core according to claim 4, wherein
the wound iron core is a single-phase wound iron core or a three-phase five-leg wound iron core in which a plurality of single-phase wound iron cores is arranged,
a gap length in the rolling direction of each layer of the discontinuous portion is defined as w, a maximum value of the gap length is defined as wₘₐₓ, and a minimum value of the gap length is defined as wₘᵢₙ, the gap length being obtainable by observing the discontinuous portion of the grain-oriented electrical steel sheet from a side surface in a stacking direction of the grain-oriented electrical steel sheet and the rolling direction of the grain-oriented electrical steel sheet,
a ratio wr between the maximum value and the minimum value defined as wr = wₘₐₓ/wₘᵢₙ is 100 or less, and
the gap length is a length of the discontinuous portion, the discontinuous portion being 0.1 mm or more.

7. The wound iron core according to claim 4, wherein
the wound iron core is a three-phase three-leg wound iron core formed by a combination of an inner wound iron core and an outer wound iron core,
a gap length in the rolling direction of each layer of the discontinuous portion is defined as w, a maximum value of the gap length is defined as wₘₐₓ, and a minimum value of the gap length is defined as wₘᵢₙ, the gap length being obtainable by observing the discontinuous portion of the grain-oriented electrical steel sheet from a side surface in a stacking direction of the grain-oriented electrical steel sheet and the rolling direction of the grain-oriented electrical steel sheet, and
a ratio wr between the maximum value and the minimum value defined as wr = wₘₐₓ/wₘᵢₙ is 500 or less.
